(19) Europäisches Patentamt
European Patent Office
Office européen des brevets

(11) EP 4 438 281 A1

(12) EUROPEAN PATENT APPLICATION

(43) Date of publication:
**02.10.2024 Bulletin 2024/40**

(51) International Patent Classification (IPC):
***B29D 11/00*** *(2006.01)* ***G02B 1/10*** *(2015.01)*
***G02C 7/10*** *(2006.01)*

(21) Application number: **23305421.2**

(22) Date of filing: **28.03.2023**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(71) Applicant: **Essilor International**
**94220 Charenton-Le-Pont (FR)**

(72) Inventors:
- **MARCK, Christelle**
  **92130 Issy les Moulineaux (FR)**
- **ROUSSEL, Catherine**
  **94380 Bonneuil sur Marne (FR)**

(74) Representative: **Korakis-Ménager, Sophie**
**Essilor International**
**Propriété Intellectuelle**
**147, rue de Paris**
**94220 Charenton-le-Pont (FR)**

# (54) DIP-TINTING OPHTHALMIC LENSES WITH NATURAL DYES

(57) The present disclosure relates to a tinted ophthalmic lens comprising a lens substrate and comprising one or more dyes, which may be of biological origin, chosen from anthraquinone dyes comprising at least two hydroxyl groups, naphthoquinone dyes comprising at least two hydroxyl groups, and mixtures thereof. The present disclosure relates to a method of tinting an ophthalmic lens comprising the following steps:
Providing an ophthalmic lens,
Providing a tinting solution comprising water as a solvent and one or more dyes dissolved therein chosen from anthraquinone dyes comprising at least two hydroxyl groups, naphthoquinone dyes comprising at least two hydroxyl groups, and mixtures thereof, said dyes may in particular be provided as a plant extract,
Dipping at least a portion of the ophthalmic lens, for example the whole ophthalmic lens, into the tinting solution to tint the ophthalmic lens, and
Recovering the tinted ophthalmic lens.

EP 4 438 281 A1

## Description

### Technical field

The present disclosure relates to the field of tinted ophthalmic lenses, tinting processes for ophthalmic lenses and, in particular, to a dip-tinting process.

### Technical background

A widely used process for tinting ophthalmic lenses is dip-tinting.

Dip-tinting consists in dying the lens through dipping the lens in a tinting solution comprising a dye, a solvent and optional additives, such as acids or bases, surfactants etc. In the dip-tinting process, the solvent and other parameters of the process, such as the additives, the temperature or the pH of the solution, increase the porosity of the lens and facilitate the diffusion of the dye into the lens. When the lens is removed from the tinting solution and dried, the porosity of the lens comes back to normal and the dye that diffused into the lens is trapped therein, thereby tinting the lens. However, the diffusion of the dye into the lens remains generally limited (due to slow diffusion and/or to the fact that the change in porosity of the lens is not homogeneous) and the obtained lens comprises the dye mainly in a layer close to the surface of the lens.

Nowadays, the dyes used for dying lenses through dip-tinting are synthetic dyes (i.e. made by chemical synthesis) dependent on the oil industry and/or on complicated transformation processes of raw matter into the dye molecules.

It would be desirable to find alternative sources of dyes usable for the dip-tinting of ophthalmic lenses, such that the production of the dyes would be less dependent or non-dependent on the oil industry and/or on complicated transformation processes of raw matter. In particular, it is desired to have dyes of biological origin usable for the dip-tinting of ophthalmic lenses.

However, dip-tinting lenses is a process in which not any dye can be used. Specific dyes and/or process conditions are necessary to obtain efficient tinting of an ophthalmic lens. Under a given set of conditions, it is not obvious to find or predict which dye will be able to penetrate a given ophthalmic lens and it is not obvious that the dye will be efficiently retained in the lens thereafter and provide a stable color to the lens.

It is the merit of the present disclosure to provide ophthalmic lenses efficiently tinted with dyes that may be of biological origin. The present disclosure also provides a remarkably simple method for tinting an ophthalmic lens via dip-tinting which allows tinting lenses with dyes of biological origin. Moreover, the presently disclosed method does not require the use of organic solvents or of synthetic additives (such as a dispersant or a mordant).

### Summary of the invention

The present disclosure relates to a tinted ophthalmic lens comprising one or more dyes chosen from anthraquinone dyes comprising at least two hydroxyl groups, naphthoquinone dyes comprising at least two hydroxyl groups, and mixtures thereof.

The present disclosure also relates to a method of tinting an ophthalmic lens comprising the following steps:

Providing an ophthalmic lens,

Providing a tinting solution comprising water as a solvent and one or more dyes dissolved therein chosen from anthraquinone dyes comprising at least two hydroxyl groups, naphthoquinone dyes comprising at least two hydroxyl groups, and mixtures thereof,

Dipping at least a portion of the ophthalmic lens, for example the whole ophthalmic lens, into the tinting solution to tint the ophthalmic lens, and

Recovering the tinted ophthalmic lens.

The present disclosure also relates to a tinted ophthalmic lens obtainable by the herein disclosed method of tinting.

### Description of the figures

Figure 1 represents the transmission spectra of a CR-39 lens substrate dip-tinted with a Rubia tinctoria extract directly after tinting (dashed line), after dipping in a sodium hydroxide solution (dotted line), and after dipping in methanol (solid line).

Figure 2 represents the transmission spectra of a CR-39 lens substrate dip-tinted with a synthetic dye directly after tinting (dashed line), after dipping in a sodium hydroxide solution (dotted line), and after dipping in methanol (solid line).

Figure 3 represents the transmission spectra of a CR-39 lens substrate dip-tinted with a Rubia tinctoria extract directly after tinting (dashed line), after 20 hours of UV-ageing (dotted line), and after 40 hours of UV-ageing (solid line).

Figure 4 represents the transmission spectra of a CR-39 lens substrate dip-tinted with a synthetic dye directly after tinting (dashed line), after 20 hours of UV-ageing (dotted line), and after 40 hours of UV-ageing (solid line).

**Detailed description**

The presently disclosed tinted ophthalmic lens comprises a lens substrate and comprises one or more dyes chosen from anthraquinone dyes comprising at least two hydroxyl groups, naphthoquinone dyes comprising at least two hydroxyl groups, and mixtures thereof.

Said one or more dyes are hereinafter called "the dyes".

The presently disclosed tinted ophthalmic lens is hereinafter called "the presently disclosed lens".

In the presently disclosed lens, the dyes contribute to providing its tint to the lens.

As herein defined, an ophthalmic lens is a lens which is designed to be used in monocles or in eyeglasses (including sunglasses, goggles and safety glasses). As defined herein, contact lenses are not ophthalmic lenses. Ophthalmic lenses are typically used to protect the eye and/or correct the sight. Ophthalmic lenses may be non-corrective ophthalmic lenses (also called piano or afocal lenses) or corrective ophthalmic lenses. A corrective lens may be a unifocal, a bifocal, a trifocal, or a progressive lens. As defined herein, ophthalmic lenses may be finished lenses of semi-finished lenses. A semi-finished lens may undergo various treatment steps such as surfacing, coloring, coating and edging before being finally included in eyeglasses or in a monocle. A finished lens is ready to be included in eyeglasses or in a monocle.

As defined herein, a lens substrate is the main part of a lens which provides the bulk of its optical and thermomechanical properties to the lens. As defined herein, an ophthalmic lens substrate is an ophthalmic lens (i.e. a lens may comprise only a lens substrate, often a semi-finished lens is a lens substrate). A lens may also comprise the lens substrate and one or more coatings deposited on the substrate. Such coatings are well known to the skilled person and may comprise a hard coat, an interferential stack, such as an antireflective stack, an anti-smudge coating, etc.

The presently disclosed lens may consist of the lens substrate. In such case, the lens substrate is a tinted lens substrate.

As defined herein, a tinted lens is a lens comprising one or more colorants, such as a dye, wherein the one or more colorants provide the lens with a certain color or modify the original color of the lens, which may originate from other sources than said colorants, such as interferential stacks, UV absorbers or the polymer from which the lens substrate is made. In a tinted lens, the parts of the tinted lens comprising the colorant are such that the colorant provides the desired color change to the desired parts of the lens and a tinted lens must comprise an amount of colorant sufficient for providing the desired change of color to the parts of the lens, whose color must be changed by the colorant. Tinting a lens is the process of adding such a colorant to a lens to tint the lens. With the present definition of a tinted lens, it may be that a tinted lens does not have a strong coloration, for example it may be the case if the only goal of adding the colorant is to balance the color originating from other sources to make it more neutral or if a very light tint is sought after. The present definition of tinted lenses also includes more strongly colored lenses such as lenses for sunglasses.

It has been observed that the dyes, which may be of biological origin, may be efficiently introduced in a lens to provide tint to the lens. Moreover, the obtained lenses have a tint that has excellent resistance to exposure to chemicals such as solvents or bases and to exposure to UV radiation.

The presently disclosed lens or the lens substrate of the presently disclosed lens may have any one of the following optical properties:

- a chroma C* above 10, for example of 10 to 150, in particular of 20 to 150,
- a Tv of 10% and to 90%, for example of 43% to 80%, and/or
- a BVC(B’) and/or a RCAR(B’) of 50% to 100%, in particular of 80% to 100%, and/or
- a TmB0 and a TmB1 of 0% to 40%, in particular of 0% to 20%, more particularly of 0% to 10%.

In the present disclosure, the colorimetric coefficients L*, a*, b*, C* and h are the colorimetric coefficients of

the CIE L*a*b* color space of 1976. They are calculated between 380 and 780 nm, for light transmitted through the lens at an angle of incidence of 0°. The observer is a "standard observer" (10°) as defined in the CIE L*a*b* color space of 1976 and the illuminant considered is D65.

The Tv factor, also called luminous transmission of the system, is such as defined in the standard ISO 13666:1998 and is the average transmission in the 380-780 nm wavelength weighted according to the sensitivity of the eye at each wavelength of the range and measured under D65 illumination conditions (daylight).

BVC(B') is a measure of the blue cut performance of a lens. It is described in document EP 3296799 A1. It is measured and calculated according to the following formula:

$$\mathrm{BVC}(\mathrm{B}') = 100\% - \frac{\int_{400\,nm}^{455\,nm} \mathrm{B}'(\lambda)\cdot \mathrm{T}(\lambda)\cdot \mathrm{d}\lambda}{\int_{400\,nm}^{455\,nm} \mathrm{B}'(\lambda)\cdot \mathrm{d}\lambda}$$

where
$T(\lambda)$ is the transmittance (%) with 5 nm pitch at a given wavelength measured at 0° incidence; and
$B'(\lambda)$ is the blue light hazard function as defined in the table below:

| Wavelength (nm) | Ponderation coefficient B'(λ) |
|---|---|
| 400 | 0.1618 |
| 410 | 0.3263 |
| 420 | 0.8496 |
| 430 | 1.00 |
| 440 | 0.6469 |
| 450 | 0.4237 |

RCAR (Retinal Cell Apoptosis Reduction), also known as photoprotective potency, is another measure of the blue cut performance of a lens. It is described in document EP 3296799 A1. It is determined as the difference between the light-induced apoptosis rate without the filtering of the lens (ANF) and the light-induced apoptosis rate with the lens (AF) divided by the light-induced apoptosis rate without any lens (ANF):

$$\mathrm{RCAR}(\%) = (\mathrm{ANF} - \mathrm{AF}) / \mathrm{ANF}.$$

RCAR may be measured by in vitro measurements by measuring the effect of the lens filtering out the blue light on the apoptosis of A2E-loaded retinal pigment epithelium cells. This in vitro model that comprises A2E-loaded retinal pigment epithelium cells, is described in details in the paper titled "Phototoxic Action Spectrum on a retinal Pigment Epithelium model of Age-Related macular Degeneration Exposed to Sunlight Normalized Conditions", by author Arnault, Barrau et al. published on August 23, 2013 in the peer-reviewed scientific Journal PlosOne (available on plosone.org website).

The in vitro measurements using narrow band light sources or a broadband visible light source are described in document EP 3214483 A1.

The measurement of RCAR may also be calculated directly from the transmission spectrum of the lens of the invention by using a calculation model correlated with the experimental in vitro results as described in document EP 3214483 A1.

TmB0 is the average transmittance as measured, e.g. with a spectrometer, of the ophthalmic lens over the range 415-455 nm.

TmB1 is the average transmittance as measured, e.g. with a spectrometer, of the ophthalmic lens over the range 420-450 nm.

In the presently disclosed lens, at least a first portion of the dyes is comprised in the lens substrate. In particular, the first portion of the dyes may comprise more than 90%, more particularly more than 99% by weight of the dyes comprised in the lens.

The presently disclosed lens may comprise a coating. In this case, at least a second portion of the dyes may be comprised in the coating. In particular, the second portion of the dyes may comprise more than 90%, more particularly

more than 99% by weight of the dyes comprised in the lens.

The coating comprised in the presently disclosed lens may be a hard coat. Said hard coat may be a composite hard coat.

As defined herein a hard coat is a coating designed to protect the lens from the formation of scratches. Such coatings, well-known to the skilled person, comprise composite hard coats.

A composite hard coat comprises mineral nanoparticles, for example silica nanoparticles, and an organic component, which may be obtained by hydrolysis and polymerization of epoxy silanes with alkyl groups such as 3-glycidoxypropyl)trimethoxysilane. These coatings solve the problem of the formation of scratches due to their two-fold properties: resistance to fine scratches due to the hardness of their mineral component and resistance to large scratches due to the suppleness of their organic component. For example, document EP0614957 describes a composite hard coat.

The presently disclosed lens may comprise a hard coat comprising silica nanoparticles and an organic component, obtained by hydrolysis and polymerization of a trialkoxysilane of formula $R\text{-}CH_2\text{-}Si(OAlk)_3$, wherein R comprises an epoxy group, for example, $R\text{-}CH_2\text{-}$ may be a 3-glycidoxypropyl group, and Alk is an alkyl group, such as a methyl or ethyl group.

The lens substrate of the presently disclosed lens may comprise a polythiourethane or an allylic polymer. In particular, the lens substrate may comprise more than 90%, more particularly more than 95%, by weight relative to the total weight of the lens substrate, of a polythiourethane or an allylic polymer.

Polythiourethane and allylic polymers suitable for making ophthalmic lens substrates are well-known to the skilled person.

Polythiourethane are cross-linked polymers obtained from monomers comprising a polyisocyanate monomer, for example an aromatic polyisocyanate monomer, and a polythiol monomer. For example said monomers may comprise a diisocyanate and a trithiol. For example, the polythiourethane may be a polythiourethane with a refractive index of greater than 1.50, in particular of from 1.55 to 1.8, more particularly of 1.6 to 1.7.

Unless otherwise specified, the refractive indexes referred to in the present disclosure are expressed at 25°C, at atmospheric pressure and at a wavelength of 550 nm.

One example of a suitable polythiourethane is MR-7 (provided by Mitsui Chemicals), which is obtained from monomers comprising 2,3-bis((2-mercaptoethyl)thio)-1-propanethiol and m-xylylene diisocyanate.

Allylic polymers suitable for ophthalmic lens substrates are cross-linked polymers obtained from precursors comprising one or more allyl monomer or oligomer comprising at least two allyl groups each. For example, the allylic polymer may be an allylic polymer with a refractive index of below 1.6, in particular of 1.45 to 1.55. Said allyl monomer or oligomer may be selected from the group comprising diethylene glycol bis(allyl carbonate), oligomers of diethylene glycol bis(allyl carbonate), ethylene glycol bis(allyl carbonate), oligomers of ethylene glycol bis(allyl carbonate), bisphenol A bis(allyl carbonate), oligomers of bisphenol A bis(allyl carbonate), diallyl phthalate, diallyl isophthalate, diallyl terephthalate, and mixtures thereof.

One example of an allylic polymer is the one obtained from polymerization CR-39™ (provided by PPG).

A more efficient tinting of the lens substrate is obtained when the lens substrate comprises a polythiourethane or an allylic polymer, in particular when the polythiourethane is obtained from monomers comprising an aromatic polyisocyanate.

In the present disclosure, the dyes may comprise or consist of dyes of biological origin. In particular, the dyes may comprise or consist of a mixture of dyes of biological origin.

A dye or a mixture of dyes of biological origin is a dye or a mixture of dyes that can be found in a living organism. In the case of a mixture of dyes, it is to be understood that all dyes comprised in said mixture can be found in one living organism even if the living organism also contains other dyes, and even if the relative amount of each dye is not the same in the living organism and in said mixture. For example, in the case of a plant extract from a plant comprising several dyes, depending on the particular extraction method, the relative amount of each dye may not be the same in the living organism and in the plant extract. A dip tinting process using this plant extract as a tinting solution may result in a lens having once again a relative amount of each dye differing from the relative amount of each dye in the tinting solution and from the relative amount of each dye in the plant.

In the present disclosure, the chemical structures of the dyes preferably comprise only carbon atoms, hydrogen atoms and oxygen atoms.

Most anthraquinone and naphthoquinone dyes of biological origin have chemical structures comprising only carbon atoms, hydrogen atoms and oxygen atoms.

In the present disclosure, the dyes may be selected from the list comprising alizarin, purpurin, xanthopurpurin, pseudopurpurin, chrysophanol, emodin, physcion, munjistin, rhein, alkannin, lucidin, lucidin omega-methyl ether, ruberythric acid, and mixtures thereof. In particular, the dyes may comprise a mixture of alizarin and purpurin, such as in plant extracts from Rubia tinctoria; a mixture of chrysophanol, emodin and physcion, such as in plant extracts from Rheum rhabarbarum; or alkannin, such as in plant extracts from Alkanna orientalis.

The presently disclosed method of tinting an ophthalmic lens (hereinafter "the presently disclosed method")

comprises the following steps:

Providing an ophthalmic lens,

Providing a tinting solution comprising water as a solvent and one or more dyes dissolved therein chosen from anthraquinone dyes comprising at least two hydroxyl groups, naphthoquinone dyes comprising at least two hydroxyl groups, and mixtures thereof,

Dipping at least a portion of the ophthalmic lens, for example the whole ophthalmic lens, into the tinting solution to tint the ophthalmic lens, and

Recovering the tinted ophthalmic lens.

The presently disclosed method is a dip-tinting method.

The steps of providing a lens and of providing a tinting solution may be performed in any order.

It should be understood that the provided lens may be dipped in the water used for the tinting solution before or after the dyes are added to or dissolved in the tinting solution.

The dyes may be dissolved in the tinting solution by adding a plant extract or one or more part of a plant to the water used for the tinting solution. In the latter case, the dissolving of the dyes contained in the one or more part of the plant in the water used for the tinting solution is an extraction of the dyes from the one or more part of the plant. In this case, it should be understood that the provided lens may be dipped in the water used for the tinting solution before or during or after the extraction of the dyes from one or more part of the plants in said water used for the tinting solution.

The mechanical means (for example the container for the solution, holder of the lens) to perform the method may be any means known to the skilled person.

The step of recovering may be performed by any method known to the skilled person and may comprise a step of drying the lens.

In the presently disclosed method, the dipping may last 5 min to 6 hours, in particular 10 min to 3 hours, and the temperature of the tinting solution during dipping may be of 40°C to 120°C, in particular of 50°C to 95°C, more particularly of 70°C to 90°C.

In the presently disclosed method, the provided ophthalmic lens may comprise a polythiourethane or an allylic polymer. In particular, the provided ophthalmic lens may comprise a lens substrate made of the polythiourethane or allylic polymer.

What has been said in relation with the presently disclosed lens regarding polythiourethanes or allylic polymers is applicable to the polythiourethanes or allylic polymers in the presently disclosed method.

It has been observed that using the dyes make it possible to tint polythiourethanes or allylic polymers particularly efficiently.

In the presently disclosed method, the pH of the tinting solution may be below 7, for example below 6, below 5, of 1 to 7, of 1.5 to 6, of 1.5 to 4, of 2 to 3, of 5 to 7, or of 6 to 7.

The pH of the tinting solution influences the hue of the dye and the efficiency of the tinting process. In particular, for tinting polythiourethanes or allylic polymers with the dyes, an acidic pH is preferred.

In some embodiments of the presently disclosed method, the provided ophthalmic lens may consist of a lens substrate. This implies that the provided ophthalmic lens is devoid of coatings.

In other embodiments of the presently disclosed method, the provided ophthalmic lens may comprise a lens substrate and one or more coatings on the lens substrate. For example, the provided ophthalmic lens may comprise a hard coat and the hard coat may be an outermost coating on the lens substrate. In such embodiments, the pH of the tinting solution may be above 7, in particular of 8 to 13, more particularly of 11 to 13.

What has been said in relation with the presently disclosed lens regarding hard coats is applicable to the hard coats in the presently disclosed method.

When the provided lens comprises a hard coat, it is possible to tint the hard coat even when the lens substrate is not easily tintable.

What has been said regarding the dyes in relation with the presently disclosed lens is applicable to the dyes in the presently disclosed method.

Moreover, in the presently disclosed method, providing the tinting solution may comprise providing the one or more dyes in the form of one or more plant extracts comprising the dyes.

Plant extracts are defined as concentrated preparations of liquid, solid or viscous consistency. As a rule, they are obtained from plants or one or more particular part of a plant by maceration (extraction to equilibrium with water or alcohol) or percolation (extraction to exhaustion with water or alcohol). Water-soluble (hydrophilic) constituents may be extracted with water giving a water-based plant extract, whilst fat-soluble (lipophilic) constituents are extracted with

alcohol or other organic solvents giving an organic solvent-based plant extract.

In the presently disclosed method, the one or more plant extracts may be water-based plant extract.

In the presently disclosed method, the one or more plant extracts may comprise an extract of one or more parts of a plant from the rubiaceae family of plants, in particular from the genus rubia, the genus asperula, or the genus galium, more particularly from Rubia tinctoria or Rubia cordifolia.

In the presently disclosed method, the one or more plant extracts may comprise an extract of one or more parts of a plant from the polygonaceae family of plants, in particular from the genus rheum or from the genus rumex, more particularly from Rheum x hybridum, Rheum rhaponticum or Rheum rhabarbatum.

In the presently disclosed method, the one or more plant extracts may comprise an extract of one or more parts of a plant from the boraginaceae family of plants, in particular from the genus alkanna, more particularly from Alkanna tinctoria or Alkanna orientalis.

In the presently disclosed method, the one or more plant extracts may comprise an extract of one or more parts of a plant from the Rhamnaceae family of plants, in particular from the genus frangula, such as Frangula alnus, or from the genus rhamnus, such as Rhamnus alaternus.

The tinting solution may be devoid of synthetic surfactants. In particular, the tinting solution may be devoid of synthetic additives other than non-surfactant acids or bases, such as acetic acid citric acid, mineral acids, and sodium hydroxide. More particularly, the tinting solution may be devoid of any synthetic additives.

The one or more plant extracts may be obtained by an extraction method wherein the only ingredients used are one or more parts of a plant comprising the dyes, for example in the form of a plant powder comprising the dyes, and water.

The one or more plant extracts may be obtained by an extraction method comprising the following steps:

a. Providing one or more parts of the plant comprising the dyes, for example in the form of a plant powder comprising the dyes,
b. Providing water in a container,
c. Plunging the provided one or more parts of the plant in the water in the container,
d. Optionally, changing the water in the container one or more times,
e. Heating the one or more parts of the plant in the water in the container to extract the dyes from the one or more parts of the plant, for example heating the one or more parts of the plant in water 15 minutes to 3 hours at 70°C to 95°C,
f. Optionally separating the one or more parts of the plant from the aqueous solution or suspension comprising the dyes to obtain the plant extract, and
g. Optionally concentrating the plant extract.

As mentioned above, the lens may be dipped in the water in the container before or during the extraction of the dyes from the plants, for example at the beginning of step e. in the extraction method above, during step e., or before step e. when step d. is omitted. The extraction of the dyes and the tinting of the lens then happen simultaneously.

In the presently disclosed method, the tinting solution may be devoid of additives other than the one or more plant extracts and other than acids or bases added to adjust the pH. The acids or bases added to adjust the pH may comprise acetic acid, citric acid, mineral acids, and sodium hydroxide.

This is in contrast with currently used dip tinting processes where a dispersant is added to help the dye penetrate the lens during the dipping.

The present disclosure also relates to a tinted ophthalmic lens obtainable by the presently disclosed method.

In particular, when such a tinted ophthalmic lens is obtained from the presently disclosed method wherein the provided ophthalmic lens is a lens substrate, the dye is comprised in the lens substrate, close to the surface of the parts of the lens substrate that were immersed in the tinting solution during the step of dipping. When the provided ophthalmic lens comprises a hard coat, a majority of the dye may be located in the hard coat.

## Examples

### Plant extracts and tinting solutions

The following plant extracts or plant powders were obtained from commercial providers in the form of powders:

- Rubia tinctoria (plant extract; Couleur Garance, 84360 Lauris, France),
- Alkanna orientalis (plant powder; Plantes et couleurs, 56320 Le Faouet, France),
- Lawsonia inermis (plant powder; Couleur Garance, 84360 Lauris, France),
- Reseda luteola (plant extract; Couleur Garance, 84360 Lauris, France).

The tinting solutions were prepared from the commercial plant extracts or powders as follows: plant extracts or plant powders were added to water at room temperature and the obtained solution was heated 1h at 70°C to 95°C.

Plant extract from Rheum x hybridum was obtained using the following procedure:

Harvest the root of Rheum x hybridum.

Cut the harvested roots of Rheum x hybridum into pieces and put the cut pieces into water at room temperature for 24h.

Remove the water.

Put the wet cut pieces of Rheum x hybridum, in water.

Heat 1h at 70 to 95°C.

Filter, keep the liquid extract and remove the plant pieces.

The thus obtained liquid extract from Rheum x hybridum was used directly as the tinting solution.

<u>Dip-tinting</u>

The following procedure was followed for dip tinting of lenses:

Provide the lens

Provide the tinting solution

Adjust the pH of the tinting solution

Dip the lens into the tinting solution

Heat at 70 to 95°C for the desired amount of time

Remove the lens and rinse with water

Table 1 below summarizes the conditions tested. The substrate material is indicated in the column "Substrate" (where "PC" means polycarbonate). The presence of a coating is specified and where a coating is present, the type is specified. "HC" means that the coating is a composite hard coat comprising silica colloids and a product of hydrolysis and polymerization of (3-glycidoxypropyl)trimethoxysilane. The pH of the tinting solution is indicated in the column "pH".

The pH of the tinting solutions was adjusted using white vinegar for acidification or sodium hydroxide for making the pH more basic.

Table 1

| Lens n° | Substrate | Coating | Plant extract | pH | Dip time (min) |
|---|---|---|---|---|---|
| <u>**1**</u> | CR-39 | no | - | 5 | 60 |
| 2 | CR-39 | no | Rubia tinctoria | 5 | 10 |
| 3 | CR-39 | no | Rubia tinctoria | 5 | 60 |
| 4 | CR-39 | no | Rubia tinctoria | 5 | 140 |
| 5 | CR-39 | no | Rubia tinctoria | 2.5 | 60 |
| 6 | CR-39 | no | Rheum x hybridum | 5 | 60 |
| 7 | CR-39 | no | Alkanna orientalis | 2.5 | 60 |
| <u>**8**</u> | CR-39 | no | Lawsonia inermis | 5 | 60 |
| <u>**9**</u> | CR-39 | no | Reseda luteola | 5 | 20 |
| 10 | MR7 | no | Rubia tinctoria | 5 | 15 |

(continued)

| Lens n° | Substrate | Coating | Plant extract | pH | Dip time (min) |
|---|---|---|---|---|---|
| 11 | MR7 | no | Rubia tinctoria | 5 | 120 |
| **12** | MR7 | no | Reseda luteola | 5 | 15 |
| 13 | CR-39 | HC | Rubia tinctoria | 2.5 | 60 |
| 14 | CR-39 | HC | Rubia tinctoria | 5 | 60 |
| 15 | PC | HC | Rubia tinctoria | 12 | 60 |
| **16** | CR-39 | HC | Reseda luteola | 2.5 | 60 |
| **17** | CR-39 | HC | Reseda luteola | 5 | 60 |

Results

Table 2 below presents measurements made on the tinted lens.

The lens numbers **in bold font and underlined** correspond to comparative examples where the tinting was inefficient (as seen e.g. from the low values of C*).

For lens n°1 the tinting solution did not comprise any dye.

Lens n° 8 was tinted with extracts from Lawsonia inermis. The dye extracted from Lawsonia inermis, lawsone, is a naphthoquinone dye comprising only one hydroxyl group (see structure below).

Lenses n° 9, 12, 16 and 17 were tinted with extracts from Reseda luteola. The dye extracted from Reseda luteola is the flavonoid dye luteolin, which is not an anthraquinone or a naphthoquinone. Luteolin comprises four hydroxyl groups and a benzopyranone group (see structure below).

Comparing lens n° 10 with lens n° 12 shows that tinting of MR7 is more efficient with Rubia tinctoria compared to Reseda Luteola.

Comparing lenses n° 13 and 14 with lenses n° 16 and 17 shows that, even with a hard coat, tinting with Reseda luteola is inefficient compared to tinting with Rubia tinctoria.

Table 2

| Lens n° | L* | a* | b* | C* | h | Tv | BVC(B') | RCAR(B') | TmB0 | TmB1 |
|---|---|---|---|---|---|---|---|---|---|---|
| **1** | 97 | 0 | 0 | 0 | 114 | 92 | 9 | 17 | 91.4 | 91.5 |
| 2 | 91 | -7 | 87 | 87 | 95 | 81.8 | 97 | 100 | 3.3 | 3.0 |
| 3 | 90 | -7 | 106 | 106 | 94 | 79.9 | 100 | 100 | 0.3 | 0.3 |
| 4 | 83 | 14 | 124 | 125 | 84 | 67.3 | 100 | 100 | 0.0 | 0.0 |
| 5 | 90 | 0 | 55 | 55 | 90 | 80.1 | 81 | 84 | 19.4 | 18.8 |
| 6 | 95 | -15 | 56 | 58 | 106 | 89.2 | 81 | 87 | 18.4 | 17.5 |
| 7 | 84 | 25 | 3 | 25 | 6 | 64.1 | 32 | 37 | 67 | 67 |
| **8** | 96 | 0 | 2 | 2 | 100 | 90.7 | 13 | 22 | 87.6 | 87.7 |
| **9** | 96 | 0 | 2 | 2 | 87 | 90.9 | 15 | 24 | 86.3 | 86.6 |
| 10 | 94 | -2 | 11 | 11 | 101.6 | 85.7 | 36.3 | 36.4 | 68.8 | 69.6 |
| 11 | 91 | -3 | 30 | 30 | 95 | 79.8 | 62 | 50 | 41.3 | 41.7 |
| **12** | 95 | -1 | 2 | 2 | 119 | 86.6 | 23 | 27 | 83.2 | 84.4 |
| 13 | 76 | 25 | 36 | 44 | 55 | 51.5 | 79 | 81 | 21.1 | 20.8 |
| 14 | 79 | 18 | 20 | 27 | 48 | 56.3 | 64 | 55 | 36.3 | 36.3 |
| 15 | 84 | 9 | 19 | 21 | 65 | 65.9 | 55 | 47 | 44.7 | 44.4 |
| **16** | 95 | -3 | 8 | 9 | 111 | 87 | 37 | 37 | 68.3 | 68.6 |
| **17** | 95 | -2 | 4 | 5 | 111 | 88 | 26 | 32 | 77.3 | 77.7 |

Structure of the molecules cited in the present disclosure (in alphabetical order)

Alizarin:

Alkannin:

Chrysophanol:

Emodin:

Lawsone:

Lucidin:

Lucidin omega-methyl ether:

Luteolin:

Munjistin:

Physcion:

Pseudopurpurin:

Purpurin:

Rhein:

Ruberythric acid:

Xanthopurpurin:

Solvent fastness

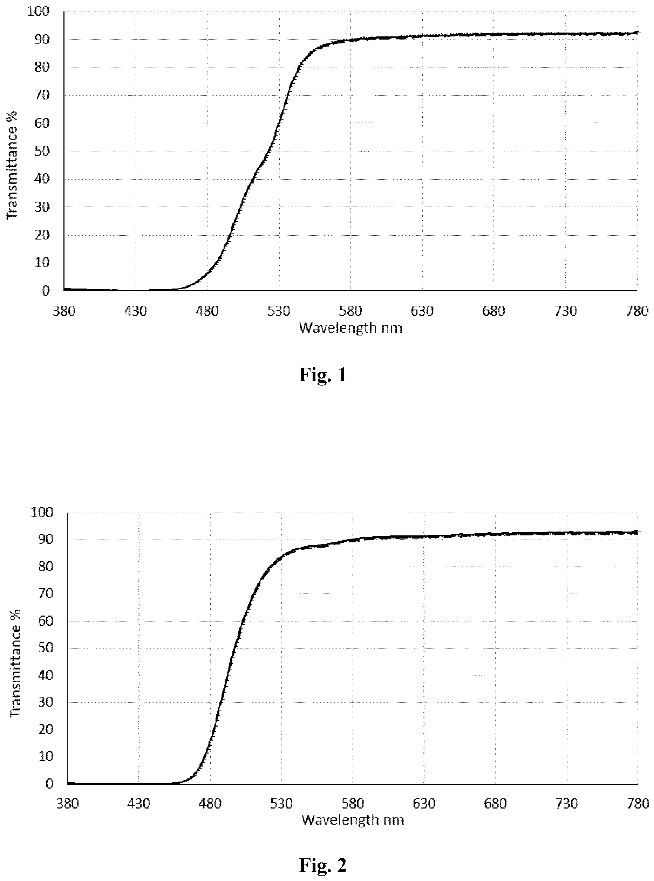

Solvent fastness of CR-39 lens substrates dip-tinted with Rubia tinctoria was tested by dipping the lens substrate successively in a sodium hydroxide solution and in methanol and compared with the solvent fastness of CR-39 lens substrates dip-tinted with a synthetic dye presently used for the dip-tinting of CR-39 lenses. As seen from the comparison between fig. 1 and fig. 2, the solvent fastness is excellent and as good as the solvent fastness of the comparative synthetic dye.

Light fastness

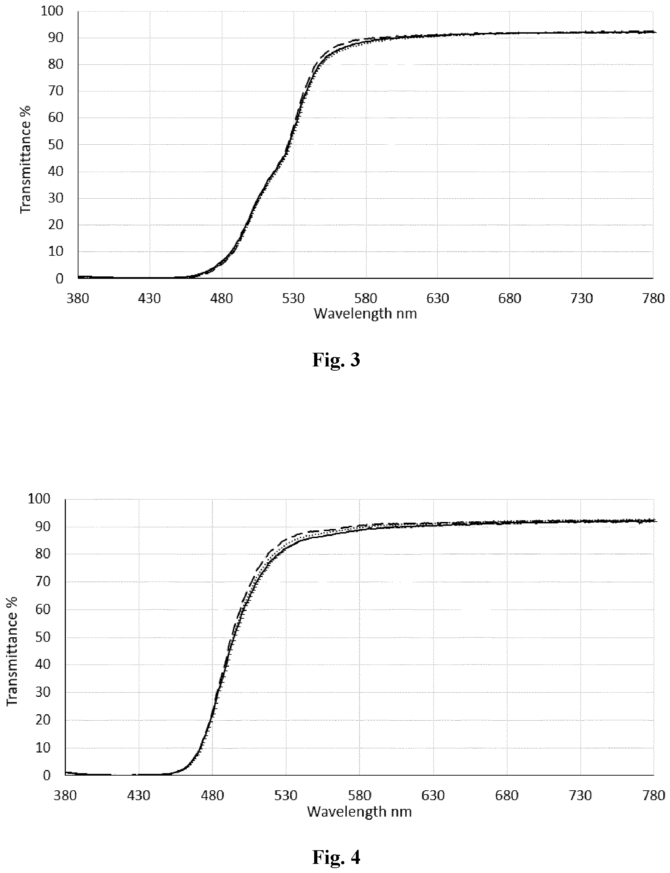

Light fastness of CR-39 lens substrates dip-tinted with Rubia tinctoria was tested by exposure to UV light in a xenon test chamber Q-SUN ® Xe-3 from Q-LAB and compared with the light fastness of CR-39 lens substrates dip-tinted with a synthetic dye presently used for the dip-tinting of CR-39 lenses. As seen from the comparison between fig. 3 and fig. 4, the light fastness is excellent and as good as the light fastness of the comparative synthetic dye.

Examples of embodiments

Example A: Tinted ophthalmic lens comprising a lens substrate and comprising one or more dyes chosen from anthraquinone dyes comprising at least two hydroxyl groups, naphthoquinone dyes comprising at least two hydroxyl groups, and mixtures thereof.

Example A1: The lens of Example A, wherein the lens consist of the lens substrate.

Example A2: The lens of Example A or A1, wherein the lens or the lens substrate has a Tv of 10% and to 90%, in particular of 43% to 80%.

Example A3: The lens of any one of Examples A to A2, wherein the lens or the lens substrate has a BVC(B') and/or a RCAR(B') of 50% to 100%, in particular of 80% to 100%.

Example A4: The lens of any one of Examples A to A3, wherein the lens or the lens substrate has a TmB0 and a TmB 1 both of 0% to 40%, in particular of 0% to 20%, more particularly of 0% to 10%

Example A5: The lens of any one of Examples A to A4, wherein the lens or the lens substrate has a chroma C* above 10, for example of 10 to 150, in particular of 20 to 150.

Example A6: The lens of any one of Examples A to A5, wherein at least a first portion of the dyes is comprised in the lens substrate.

Example A7: The lens of Example A6, wherein the first portion of the dyes comprises more than 90%, in particular more than 99% by weight of the dyes comprised in the lens.

Example A8: The lens of any one of Examples A and A2 to A7, wherein the lens comprises at least one coating.

Example A9: The lens of Example A8, wherein at least a second portion of the dyes is comprised in the coating.

Example A10: The lens of Example A9, wherein the second portion of the dyes comprises more than 90%, in particular more than 99% by weight of the dyes comprised in the lens.

Example A11: The lens of any one of Examples A8 to A10, wherein the coating is a hard coat, in particular a composite hard coat, more particularly a hard coat comprising silica nanoparticles and an organic component, obtained by hydrolysis and polymerization of a trialkoxysilane of formula $R\text{-}CH_2\text{-}Si(OAlk)_3$, wherein R comprises an epoxy group, and Alk is an alkyl group.

Example A12: The lens of any one of Examples A to A11, wherein the lens substrate comprises a polythiourethane or an allylic polymer.

Example A13: The lens of Example A12, wherein the lens substrate comprises more than 90%, in particular more than 95%, by weight relative to the total weight of the lens substrate, of a polythiourethane or an allylic polymer.

Example A14: The lens of any one of Examples A to A13, wherein the one or more dyes are of biological origin, in particular wherein the one or more dyes are a mixture of dyes of biological origin.

Example A15: The lens of any one of Examples A to A14, wherein the chemical structures of the one or more dyes comprise only carbon atoms, hydrogen atoms and oxygen atoms.

Example A16: The lens of any one of Example A15, wherein the one or more dyes are selected from the list comprising alizarin, purpurin, xanthopurpurin, pseudopurpurin, chrysophanol, emodin, physcion, munjistin, rhein, alkannin, lucidin, lucidin omega-methyl ether, ruberythric acid, and mixtures thereof, in particular wherein the dyes comprise a mixture of alizarin and purpurin; a mixture of chrysophanol, emodin and physcion; or alkannin.

Example B: Method of tinting an ophthalmic lens comprising the following steps:

Providing an ophthalmic lens,

Providing a tinting solution comprising water as a solvent and one or more dyes dissolved therein chosen from anthraquinone dyes comprising at least two hydroxyl groups, naphthoquinone dyes comprising at least two hydroxyl groups, and mixtures thereof,

Dipping at least a portion of the ophthalmic lens, for example the whole ophthalmic lens, into the tinting solution to tint the ophthalmic lens, and

Recovering the tinted ophthalmic lens.

Example B1: The method of Example B, wherein the dipping lasts 5 min to 6 hours, in particular 10 min to 3 hours, and the temperature of the tinting solution during dipping is of 40°C to 120°C, in particular of 50°C to 95°C, more particularly of 70°C to 90°C.

Example B2: The method of Example B or B1, wherein the provided ophthalmic lens comprises a polythiourethane or an allylic polymer, in particular wherein the provided ophthalmic lens comprises a lens substrate made of the polythiourethane or allylic polymer.

Example B3: The method of any one of Examples B to B2, wherein the pH of the tinting solution is below 7, for

example below 6, below 5, of 1 to 7, of 1.5 to 6, of 1.5 to 4, of 2 to 3, of 5 to 7, or of 6 to 7.

Example B4: The method of Example B3, wherein the provided ophthalmic lens comprises a lens substrate made of the polythiourethane or allylic polymer, wherein the tinting solution comprises at least one anthraquinone dye comprising at least two hydroxyl groups, and wherein the pH of the tinting solution is below 5, for example of 1.5 to 4 or of 2 to 3.

Example B5: The method of any one of Examples B to B4, wherein the provided ophthalmic lens consist of a lens substrate.

Example B6: The method of any one of Examples B to B4, wherein the provided ophthalmic lens comprises a lens substrate and one or more coatings on the lens substrate.

Example B7: The method of Example B6, wherein the provided ophthalmic lens comprises a hard coat, for example a composite hard coat, and the hard coat is an outermost coating on the lens substrate.

Example B8: The method of Example B7, wherein the pH of the tinting solution is above 7, in particular of 8 to 13, more particularly of 11 to 13.

Example B9: The method of any one of Examples B to B8, wherein the one or more dyes are of biological origin, in particular wherein the one or more dyes are a mixture of dyes of biological origin.

Example B10 The lens of any one of Examples B to B9, wherein the chemical structures of the one or more dyes comprise only carbon atoms, hydrogen atoms and oxygen atoms.

Example B11: The method of Examples B10, wherein the dyes comprised in the tinting solution are selected from the list comprising alizarin, purpurin, xanthopurpurin, pseudopurpurin, chrysophanol, emodin, physcion, munjistin, rhein, alkannin, lucidin, lucidin omega-methyl ether, ruberythric acid, and mixtures thereof, in particular wherein said dyes comprise a mixture of alizarin and purpurin; a mixture of chrysophanol, emodin and physcion; or alkannin.

Example B12: The method of any one of Examples B to B11, wherein the tinting solution is devoid of synthetic surfactants, in particular devoid of synthetic additives other than non-surfactant acids or bases, such as acetic acid, citric acid, mineral acids, and sodium hydroxide, more particularly devoid of any synthetic additives.

Example B13: The method of any one of Examples B to B12, wherein providing the tinting solution comprises providing the one or more dyes in the form of one or more plant extracts comprising the one or more dyes, in particular, in the form of one or more water-based plant extract.

Example B14: The method of Example B13, wherein the one or more plant extracts may comprise an extract of one or more parts of a plant of:

a. the rubiaceae family of plants, in particular from the genus rubia, the genus asperula, or the genus galium, more particularly from Rubia tinctoria or Rubia cordifolia; or of
b. the polygonaceae family of plants, in particular from the genus rheum or from the genus rumex, more particularly from Rheum x hybridum, Rheum rhaponticum or Rheum rhabarbatum; or of
c. the boraginaceae family of plants, in particular from the genus alkanna, more particularly from Alkanna tinctoria or Alkanna orientalis; or of
d. the Rhamnaceae family of plants, in particular from the genus frangula, such as Frangula alnus, or from the genus rhamnus, such as Rhamnus alaternus.

Example B15: The method of any one of Example B13 or B 14, wherein the one or more plant extracts are each obtained by an extraction method wherein the only ingredients used are one or more parts of a plant comprising the one or more dyes and water, for example in the form of a plant powder comprising the dyes.

Example B 16: The method of any one of Examples B13 to B15, wherein the one or more plant extracts are each obtained by an extraction method comprising the following steps:

a. Providing one or more parts of the plant comprising the one or more dyes, for example in the form of a plant powder comprising the dyes,
b. Providing water in a container,
c. Plunging the provided parts of the plant in the water in the container,
d. Optionally, changing the water in the container one or more times,
e. Heating the parts of the plant in the water in the container to extract the dyes from the parts of the plant, for example heating the parts of the plant in water 15 minutes to 3 hours at 70°C to 95°C,
f. Optionally separating the parts of the plant from the aqueous solution or suspension comprising the dyes to obtain the plant extract, and
g. Optionally concentrating the plant extract.

Example B 17: The method of any one of Examples B13 to B16, wherein the tinting solution is devoid of additives other than the one or more plant extracts and other than acids or bases added to adjust the pH, such as acetic acid,

citric acid, mineral acids, or sodium hydroxide.

Example C: Tinted ophthalmic lens obtainable by the method of any one of Examples B to B 17.

## Claims

**1.** Tinted ophthalmic lens comprising a lens substrate and comprising one or more dyes chosen from anthraquinone dyes comprising at least two hydroxyl groups, naphthoquinone dyes comprising at least two hydroxyl groups, and mixtures thereof.

**2.** The lens of claim 1, wherein at least a first portion of the dyes is comprised in the lens substrate.

**3.** The lens of claim 1 or 2, wherein the lens comprises a composite hard coat and wherein at least a second portion of the dyes is comprised in the composite hard coat.

**4.** The lens of any one of the preceding claims, wherein the lens substrate comprises a polythiourethane or an allylic polymer.

**5.** The lens of any one of the preceding claims, wherein the dyes are of biological origin, in particular wherein the dyes are a mixture of dyes of biological origin.

**6.** The lens of claim 5, wherein the dyes are selected from the list comprising alizarin, purpurin, xanthopurpurin, pseudopurpurin, chrysophanol, emodin, physcion, munjistin, rhein, alkannin, lucidin, lucidin omega-methyl ether, and mixtures thereof, in particular wherein the dyes comprise a mixture of alizarin and purpurin; a mixture of chrysophanol, emodin and physcion; or alkannin.

**7.** Method of tinting an ophthalmic lens comprising the following steps:

Providing an ophthalmic lens,
Providing a tinting solution comprising water as a solvent and one or more dyes dissolved therein chosen from anthraquinone dyes comprising at least two hydroxyl groups, naphthoquinone dyes comprising at least two hydroxyl groups, and mixtures thereof,
Dipping at least a portion of the ophthalmic lens into the tinting solution to tint the ophthalmic lens, and
Recovering the tinted ophthalmic lens.

**8.** The method of claim 7, wherein the dipping lasts 5 min to 6 hours, in particular 10 min to 3 hours, and the temperature of the tinting solution during dipping is of 40°C to 120°C, in particular of 50°C to 95°C, more particularly of 70°C to 90°C.

**9.** The method of claim 7 or 8, wherein the provided ophthalmic lens comprises a polythiourethane or an allylic polymer, in particular wherein the provided ophthalmic lens comprises a lens substrate made of the polythiourethane or allylic polymer.

**10.** The method of any one of claims 7 to 9, wherein the provided ophthalmic lens consist of a lens substrate.

**11.** The method of any one of claims 7 to 9, wherein the provided ophthalmic lens comprises a hard coat, for example a composite hard coat, and the hard coat is an outermost coating on the lens substrate.

**12.** The method of any one of claims 7 to 11, wherein providing the tinting solution comprises providing the one or more dyes in the form of one or more plant extracts comprising the one or more dyes, in particular in the form of one or more water-based plant extract.

**13.** The method of claim 12, wherein the one or more plant extracts are each obtained by an extraction method wherein the only ingredients used are parts of a plant comprising the one or more dyes and water, for example in the form of a plant powder comprising the dyes.

**14.** The method of claim 12 or 13, wherein the tinting solution is devoid of additives other than the one or more plant extracts and other than acids or bases added to adjust the pH, such as acetic acid, citric acid, mineral acids, or sodium hydroxide.

**15.** Tinted ophthalmic lens obtainable by the method of any one of claims 7 to 14.

Transmittance %
100
90
80
70
60
50
40
30
20
10
0
380
430
480
530
580
630
680
730
780
Wavelength nm

**Fig. 1**

Transmittance %
100
90
80
70
60
50
40
30
20
10
0
380
430
480
530
580
630
680
730
780
Wavelength nm

**Fig. 2**

100
90
80
70
60
50
40
30
20
10
0
Transmittance %
380
430
480
530
580
630
680
730
780
Wavelength nm

**Fig. 3**

100
90
80
70
60
50
40
30
20
10
0
Transmittance %
380
430
480
530
580
630
680
730
780
Wavelength nm

**Fig. 4**

Europäisches Patentamt
European Patent Office
Office européen des brevets

# EUROPEAN SEARCH REPORT

Application Number
EP 23 30 5421

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X<br>A | US 2016/313574 A1 (TAKEDOMI YUKA [JP] ET AL) 27 October 2016 (2016-10-27)<br>* abstract *<br>* paragraphs [0053], [0060], [0067] - [0078], [0087], [0088], [0089] * | 1,2, 4-10, 12-15<br>3,11 | INV.<br>B29D11/00<br>G02B1/10<br>G02C7/10 |
| X<br>A | US 2008/075848 A1 (KURATA SHINGO [JP] ET AL) 27 March 2008 (2008-03-27)<br>* abstract *<br>* paragraphs [0014] - [0017] * | 1,3-9, 11-15<br>2,10 | |
| X<br>A | EP 2 514 791 A1 (MENICON CO LTD [JP]) 24 October 2012 (2012-10-24)<br>* abstract *<br>* paragraphs [0023] - [0025], [0036] - [0049] * | 1,2,4-6<br>7-15 | |
| A | US 2018/290408 A1 (PARK DAVID JOHN [IE] ET AL) 11 October 2018 (2018-10-11)<br>* abstract *<br>* paragraph [0060] * | 1-15 | TECHNICAL FIELDS SEARCHED (IPC)<br>B29D<br>G02B<br>G02C<br>C09B |
| A | DULO BENSON ET AL: "Natural Quinone Dyes: A Review on Structure, Extraction Techniques, Analysis and Application Potential", WASTE AND BIOMASS VALORIZATION, SPRINGER NETHERLANDS, NL, vol. 12, no. 12, 10 May 2021 (2021-05-10), pages 6339-6374, XP037615370, ISSN: 1877-2641, DOI: 10.1007/S12649-021-01443-9 [retrieved on 2021-05-10]<br>* abstract *<br>* page 2 - page 5 * | 1-15 | |

The present search report has been drawn up for all claims

1

| Place of search | Date of completion of the search | Examiner |
|---|---|---|
| The Hague | 15 August 2023 | Heckmann, Paul |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

# ANNEX TO THE EUROPEAN SEARCH REPORT ON EUROPEAN PATENT APPLICATION NO. EP 23 30 5421

This annex lists the patent family members relating to the patent documents cited in the above-mentioned European search report.
The members are as contained in the European Patent Office EDP file on
The European Patent Office is in no way liable for these particulars which are merely given for the purpose of information.

15-08-2023

| Patent document cited in search report | Publication date | Patent family member(s) | Publication date |
|---|---|---|---|
| US 2016313574 A1 | 27-10-2016 | AU 2014347930 A1 | 02-06-2016 |
| | | CA 2930507 A1 | 21-05-2015 |
| | | CN 105723273 A | 29-06-2016 |
| | | EP 3070515 A1 | 21-09-2016 |
| | | JP 6310940 B2 | 11-04-2018 |
| | | JP WO2015072336 A1 | 16-03-2017 |
| | | KR 20160068927 A | 15-06-2016 |
| | | US 2016313574 A1 | 27-10-2016 |
| | | WO 2015072336 A1 | 21-05-2015 |
| US 2008075848 A1 | 27-03-2008 | CN 101153964 A | 02-04-2008 |
| | | EP 1902831 A2 | 26-03-2008 |
| | | JP 4229160 B2 | 25-02-2009 |
| | | JP 2008076965 A | 03-04-2008 |
| | | US 2008075848 A1 | 27-03-2008 |
| EP 2514791 A1 | 24-10-2012 | EP 2514791 A1 | 24-10-2012 |
| | | JP 5897906 B2 | 06-04-2016 |
| | | JP WO2011074501 A1 | 25-04-2013 |
| | | WO 2011074501 A1 | 23-06-2011 |
| US 2018290408 A1 | 11-10-2018 | AU 2015412762 A1 | 17-05-2018 |
| | | CN 108349177 A | 31-07-2018 |
| | | EP 3368285 A1 | 05-09-2018 |
| | | JP 6823653 B2 | 03-02-2021 |
| | | JP 2018537707 A | 20-12-2018 |
| | | KR 20180079383 A | 10-07-2018 |
| | | US 2018290408 A1 | 11-10-2018 |
| | | WO 2017074444 A1 | 04-05-2017 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- EP 3296799 A1
- EP 3214483 A1
- EP 0614957 A

### Non-patent literature cited in the description

- **ARNAULT, BARRAU et al.** Phototoxic Action Spectrum on a retinal Pigment Epithelium model of Age-Related macular Degeneration Exposed to Sunlight Normalized Conditions. *Journal PlosOne,* 23 August 2013